# EUROPÄISCHE PATENTSCHRIFT

(11) **EP 2 392 213 B1**
(45) Veröffentlichungstag und Bekanntmachung des Hinweises auf die Patenterteilung: **12.07.2017**
(21) Anmeldenummer: 11162041.5
(22) Anmeldetag: 12.04.2011
(51) Int. Cl.: A21C 9/08

(54) **Zuführvorrichtung für Teigrohlinge, insbesondere für zur Brezelherstellung vorgeformte Teigstränge und Verfahren zur Zuführung von Teigrohlingen**
Supply device for dough pieces, in particular for pre-formed dough strings used in the production of pretzels and method for supplying dough pieces
Dispositif d'introduction pour morceaux de pâte brute, notamment pour des tronçons de pâte préformés pour la fabrication de bretzels et procédé d'introduction de morceaux de pâte brute

(30) Priorität: 01.06.2010 DE 102010022364
(43) Veröffentlichungstag der Anmeldung: 07.12.2011
(73) Patentinhaber: Piller, Oswald, 85757 Karlsfeld (DE)
(72) Erfinder: Piller, Oswald, 85757 Karlsfeld (DE)
(74) Vertreter: Karakatsanis, Georgios

(56) Entgegenhaltungen:
- EP-A- 0 170 436
- EP-A2- 0 173 577
- EP-A2- 0 962 142
- DE-C1- 3 841 395
- DE-U1-202008 010 442
- JP-A- 2000 316 463
- US-A- 4 036 569
- US-A- 4 632 381

## Beschreibung

Die vorliegende Erfindung bezieht sich auf eine Zuführvorrichtung für Teigrohlinge, insbesondere auf eine Zuführvorrichtung für zur Brezelherstellung vorgeformte Teigstränge gemäß dem Oberbegriff des Patentanspruchs 1. Ferner bezieht sich die Erfindung auf ein Verfahren zur Zuführung von Teigrohlingen an eine Vorrichtung zur Verarbeitung der Teigrohlinge.

Zuführvorrichtungen für gerade Teigrohlinge, beispielsweise für zur Brezelherstellung vorgeformte Teigstränge sind aus dem Stand der Technik bekannt. Derartige Vorrichtungen sind in der Regel einer Vorrichtung zur Verarbeitung der Teigrohlinge vorgeschaltet, beispielsweise einer Vorrichtung zum Schlingen von Brezeln.

Vor der Verarbeitung der Teigrohlinge durch die entsprechende Vorrichtung ist es jedoch in der Regel erforderlich, die Teigrohlinge zu strecken, zu vermessen und auszurichten, um die Verarbeitung zu ermöglichen. Des Weiteren sind oft Mechanismen erforderlich, durch die sehr klein oder sehr groß dimensionierte Teigrohlinge aussortiert werden, da die Vorrichtungen zur Verarbeitung der Teigrohlinge einer bestimmten Größe verarbeiten können.

Durch die erwähnte Notwendigkeit des Streckens, Vermessens und Ausrichtens der Teigrohlinge bedingt, ist aus dem Stand der Technik bekannt, zwischen der Zuführvorrichtung für die Teigrohlinge und der Vorrichtung zur Verarbeitung der Teigrohlinge zusätzliche Vorrichtungen vorzusehen, durch die ein Strecken, Vermessen und Ausrichten der Teigrohlinge erzielbar ist. In nachteiliger Weise resultiert diese Vorgehensweise in einer Erhöhung der Herstellungs- und Montagekosten der Gesamtvorrichtung sowie in einer erheblichen zeitlichen Verzögerung bei der Herstellung der Teigwaren, da von der Zuführung bis zur Verarbeitung der Rohlinge zusätzliche Schritte erforderlich sind.

Aus der EP 0962142 A2 geht eine Zuführvorrichtung für Teigrohlinge hervor, welche ein erstes Förderband und ein zweites Förderband umfasst, die hintereinander geschaltet sind, wobei die Teigrohlinge zu Beginn des Zuführprozesses auf dem ersten Förderband angeordnet sind und vom ersten Förderband an das zweite Förderband übergeben werden, wobei die Geschwindigkeit des mindestens einen zweiten Förderbandes höher ist, als die Geschwindigkeit des ersten Förderbandes.

Der vorliegenden Erfindung liegt daher die Aufgabe zugrunde, eine Zuführvorrichtung für Teigrohlinge, insbesondere für zur Brezelherstellung vorgeformte Teigstränge anzugeben, deren Verwendung den Herstellungsprozess der aus den Teigrohlingen herzustellenden Waren vereinfacht und beschleunigt.

Insbesondere soll ein Strecken, Vermessen und Ausrichten der Teigrohlinge während des Zuführprozesses ermöglicht werden. Des Weiteren soll durch die erfindungsgemäße Zuführvorrichtung ein Aussortieren von unter- oder überdimensionierten Teigrohlingen vor der Übergabe der Teigrohlinge an die Vorrichtung zur Verarbeitung der Teigrohlinge ermöglicht werden.

Ferner soll ein Verfahren zur Zuführung von Teigrohlingen an eine Vorrichtung zur Verarbeitung der Teigrohlinge vorgeschlagen werden, durch dessen Durchführung ein Strecken, Vermessen und Ausrichten der Teigrohlinge während des Zuführprozesses ermöglicht wird.

Diese Aufgabe wird für eine Zuführvorrichtung durch die Merkmale des Patentanspruchs 1 gelöst. Ein Verfahren zur Zuführung von Teigrohlingen an eine Vorrichtung zur Verarbeitung der Teigrohlinge ist Gegenstand des Patentanspruchs 9. Weitere erfindungsgemäße Ausgestaltungen und Vorteile gehen aus den entsprechenden Unteransprüchen hervor

Danach wird eine Zuführvorrichtung für Teigrohlinge, insbesondere für zur Brezelherstellung vorgeformte Teigstränge vorgeschlagen, welche ein erstes Förderband und mindestens ein zweites Förderband umfasst, die hintereinander geschaltet sind, wobei die Teigrohlinge zu Beginn des Zuführprozesses auf dem ersten Förderband angeordnet sind und vom ersten Förderband an das mindestens eine zweite Förderband übergeben werden.

Hierbei ist vorgesehen, dass die Geschwindigkeit des mindestens einen zweiten Förderbandes um ein vorgegebenes Maß höher ist als die Geschwindigkeit des ersten Förderbandes. Dadurch wird in vorteilhafter Weise gewährleistet, dass die Teigrohlinge bei der Übergabe vom ersten Förderband an das zweite Förderband gestreckt und parallel zur Förderrichtung des zweiten Förderbandes ausgerichtet werden, da der jeweilige Teigrohling vom zweiten, schnelleren Förderband gezogen wird, wodurch ein Strecken und Ausrichten des Teigrohlings bei der Übergabe stattfindet.

Die Teigrohlinge können zu Beginn des Zuführprozesses im Wesentlichen auf dem ersten Förderband parallel zur Förderrichtung des ersten Förderbandes angeordnet sein. Alternativ dazu können die Teigrohlinge zu Beginn des Zuführprozesses nicht im Wesentlichen parallel zur Förderrichtung des ersten Förderbandes angeordnet sein, sondern einen Winkel mit der Längsachse des ersten Förderbandes bilden und/oder nicht gerade geformt sein.

Gemäß der Erfindung ist vorgesehen, dass der Haftreibungskoeffizient des mindestens einen zweiten Förderbandes höher ist als der Haftreibungskoeffizient des ersten Förderbandes, so dass, insbesondere bei ein hohes Gewicht aufweisenden Teigrohlingen ein "Leerlaufen" des zweiten Förderbandes vermieden werden kann.

Des Weiteren umfasst gemäß einer Weiterbildung der Erfindung die erfindungsgemäße Übergabevorrichtung einen Sensor, welcher das dem ersten Förderband abgewandte Ende eines vom zweiten Förderband transportierten ankommenden Teigrohlings erfasst und dadurch bedämpft wird, wobei der Sensor solange bedämpft bleibt, bis sich der Teigrohling nicht mehr im Detektionsbereich des Sensors befindet. Für den Fall, dass mehrere zweite Förderbänder vorgesehen sind ist jedem zweiten Förderband ein Sensor zugeordnet.

Gemäß einer Weiterbildung der Erfindung wird in einer mit dem Sensor verbundenen Steuerung anhand der Bedämpfungsdauer des Sensors und der Fördergeschwindigkeit des zweiten Förderbandes die Länge des gestreckten und parallel zur Förderrichtung des zweiten Förderbandes ausgerichteten Teigrohlings ermittelt. Für den Fall, dass die auf diese Weise ermittelte Länge des Teigrohlings eine Soll-Länge plus/minus einen vorgegebenen Längen-Offset über- oder untersteigt, wird das zweite Förderband derart gesteuert, dass dieser Rohling das Ende des zweiten Förderbandes erreicht, wo er durch die weitere Drehung des Förderbandes an einen Behälter oder an ein weiteres Förderband übergeben wird, wodurch der Rohling aussortiert wird.

Für den Fall, dass die ermittelte Länge des Teigrohlings der Soll-Länge plus/minus einen vorgegebenen Längen-Offset entspricht, ist vorgesehen, dass der Teigrohling so weit transportiert wird, bis er in Bezug auf die Längsachse eines weiteren Förderbandes oder einer Übergaberutsche zur Weiterleitung des Teigrohlings an die Vorrichtung zur Verarbeitung des Teigrohlings mittig angeordnet ist. Das weiteres Förderband oder die Übergaberutsche sind vorzugsweise senkrecht zum zweiten Förderband 2 angeordnet. Der Längenoffset kann auch der Wert Null annehmen.

Wenn der Teigrohling diese Position erreicht hat, werden das erste und das zweite Förderband angehalten, und der Teigrohling wird vom zweiten Förderband mittels einer geeigneten Einrichtung an das weitere Förderband bzw. an die Übergaberutsche übergeben. Nach der Übergabe des Teigrohlings werden die Förderbänder erneut in Bewegung gesetzt.

Die Einrichtung zur Übergabe des Teigrohlings an das weitere Förderband bzw. an die Übergaberutsche kann beispielsweise als mechanisch, pneumatisch, hydraulisch oder elektrisch antreibbare Schiebevorrichtung ausgeführt sein.

Alternativ dazu kann zur Übergabe eines mittig zur Längsachse der Übergaberutsche bzw. des weiteren Förderbandes angeordneter Teigrohling dadurch an die Übergaberutsche bzw. an das weitere Förderband übergeben werden, indem das zweite Förderband als "V-Band" ausgeführt ist, welches aus zwei Teilförderbändern besteht, die zum Transportieren der Teigrohlinge parallel und unmittelbar zueinander angrenzend angeordnet und mit der gleichen Geschwindigkeit angetrieben werden, wobei die zwei Förderbänder von einer ersten Position, bei der die Obertrümmer beider Förderbänder zum Transportieren der Teigrohlinge eine Ebene bilden, durch Drehung um eine Achse parallel zu der Längsachse oder um deren Längsachse eine zweite Position annehmen können, bei der die Obertrümmer der Förderbänder in einem vorgegebenen Winkel zueinander angeordnet sind, so dass der Teigrohling durch die Gravitation an die darunterliegende Übergaberutsche bzw. an das darunterliegende weitere Förderband übergeben werden kann. Nach der auf diese Weise erfolgten Übergabe des Teigrohlings nehmen beide Förderbänder die erste Position an, bei der sie parallel und unmittelbar zueinander angrenzend angeordnet sind.

Durch die Konzeption wird eine Übergabevorrichtung geschaffen, durch deren Betrieb während der Übergabe der Teigrohlinge die Teigrohlinge gestreckt, vermessen, ausgerichtet und gegebenenfalls aussortiert werden können. In diesem Zusammenhang sei darauf hingewiesen, dass bei den aus dem Stand der Technik bekannten Vorrichtungen zum Strecken und Ausrichten von Teigrohlingen ein Aussortieren von Teigrohlingen nicht möglich ist.

Gemäß einer Weiterbildung der Erfindung können das erste und das zumindest eine zweite Förderband dieselbe Längsachse oder parallel zueinander angeordnete Längsachsen aufweisen oder ein einem beliebigen Winkel zueinander angeordnet sein. Ferner ist es möglich, dass das erste Förderband und das zumindest eine zweite Förderband von einer Antriebseinheit angetrieben werden, wobei in diesem Fall die unterschiedlichen Geschwindigkeiten der Förderbänder durch unterschiedliche Übersetzungen der Antriebsdrehzahl der Antriebseinheit, beispielsweise über unterschiedlich dimensionierte Zahnräder, erzielbar sind. Alternativ dazu kann jedem Förderband eine eigene, separate Antriebseinheit zugeordnet werden.

Im Rahmen einer vorteilhaften Weiterbildung der Erfindung kann vorgesehen sein, dass zum Beschicken mehrerer Vorrichtungen zur Verarbeitung von Teigrohlingen dem ersten Förderband mehrere zweite Förderbänder nachgeschaltet sind, die jeweils einer Vorrichtung zur Verarbeitung von Teigrohlingen zugeordnet sind. Hierbei ist die Breite des ersten Förderbandes derart gewählt, dass die Teigrohlinge gleichzeitig an die mehreren zweiten Förderbänder übergeben werden können; die zweiten Förderbänder können beispielsweise in einem vorgegebenen Winkel zum ersten Förderband angeordnet sein.

Die Erfindung wird im Folgenden anhand der beigefügten Figuren beispielhaft näher erläutert. Es zeigen:
Fig. 1: Eine perspektivische Ansicht einer gemäß einer ersten Ausführungsform der Erfindung ausgeführten Zuführvorrichtung für gerade Teigrohlinge, insbesondere für zur Brezelherstellung vorgeformte Teilstränge, umfassend ein zweites Förderband; und
Fig. 2: Eine schematische Schnittansicht eines V-Förderbandes gemäß der Erfindung zur Veranschaulichung der Anordnung der Förderbänder zueinander, wenn diese die zweite Position zur Übergabe des Teigrohlings annehmen.

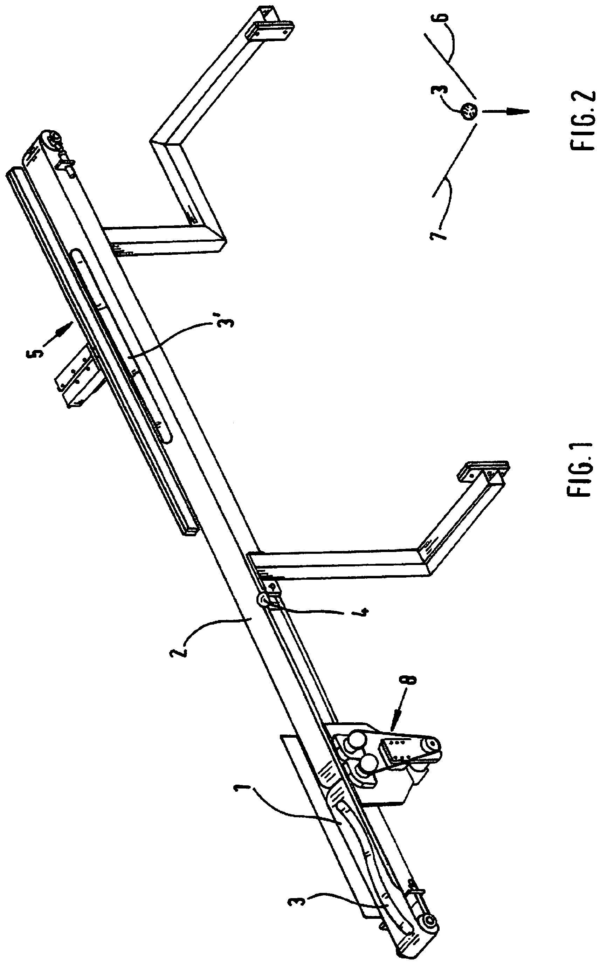

Figur 1 umfasst eine Zuführvorrichtung für Teigrohlinge, insbesondere für zur Brezelherstellung vorgeformte Teilstränge ein erstes Förderband 1 und ein zweites Förderband 2, die hintereinander geschaltet sind. Die Teigrohlinge 3 sind bei dem gezeigten Beispiel zu Beginn des Zuführprozesses im Wesentlichen parallel zur Förderrichtung des ersten Förderbandes 1 angeordnet und werden vom ersten Förderband 1 an das zweite Förderband 2 übergeben.

Da vorgesehen ist, dass die Geschwindigkeit des zweiten Förderbandes 2 um ein vorgegebenes Maß höher ist als die Geschwindigkeit des ersten Förderbandes 1 wird gewährleistet, dass die Teigrohlinge 3 bei der Übergabe vom ersten Förderband 1 an das zweite Förderband 2 gestreckt und parallel zur Förderrichtung des zweiten Förderbandes 2 ausgerichtet werden; hierbei wird der zu übergebende Teigrohling 3 vom zweiten, schnelleren Förderband 2 gezogen, wodurch ein Strecken und Ausrichten des Teigrohlings 3 bei der Übergabe stattfindet. Erfindungsgemäß wird vorgesehen , dass der Haftreibungskoeffizient des mindestens einen zweiten Förderbandes 2 höher ist als der Haftreibungskoeffizient des ersten Förderbandes 1, so dass, insbesondere bei ein hohes Gewicht aufweisenden Teigrohlingen ein "Leerlaufen" des zweiten Förderbandes 2 vermieden werden kann. Des Weiteren umfasst die gezeigte Übergabevorrichtung einen Sensor 4, welcher das dem ersten Förderband 1 abgewandte Ende eines vom zweiten Förderband 2 transportierten ankommenden Teigrohlings 3 erfasst und dadurch bedämpft wird, wobei der Sensor 4 solange bedämpft bleibt, bis sich der Teigrohling 3 aufgrund der Bewegung des zweiten Förderbandes 2 nicht mehr im Detektionsbereich des Sensors 4 befindet.

Anhand der Bedämpfungsdauer des Sensors und der Fördergeschwindigkeit des zweiten Förderbandes 2 wird in einer Steuerung die Länge des gestreckten und parallel zur Förderrichtung des zweiten Förderbandes 2 ausgerichteten Teigrohlings 3 ermittelt, wobei, wenn die ermittelte Länge des Teigrohlings 3 eine Soll-Länge plus/minus einen vorgegebenen Längen-Offset über- oder untersteigt, das zweite Förderband 2 derart gesteuert wird, dass dieser Teigrohling das Ende des zweiten Förderbandes 2 erreicht, wo er durch die weitere Drehung des Förderbandes 2 an einen Behälter oder an ein weiteres Förderband übergeben wird, wodurch der Teigrohling aussortiert wird.

Wenn die ermittelte Länge des Teigrohlings 3 der Soll-Länge plus/minus einen vorgegebenen Längen-Offset entspricht, wird der Teigrohling 3 vom zweiten Förderband 2 so weit transportiert, bis er in Bezug auf die Längsachse eines weiteren Förderbandes oder einer Übergaberutsche zur Weiterleitung der Teigrohlinge 3, 3' an die Vorrichtung zur Verarbeitung der Teigrohlinge mittig angeordnet ist.

Das weitere Förderband bzw. die Übergaberutsche sind vorzugsweise senkrecht zum zweiten Förderband 2 angeordnet. In Figur 1 ist mit dem Bezugszeichen 3' ein Teigrohling bezeichnet, welcher in Bezug auf die Längsachse eines weiteren, nicht dargestellten Förderbandes oder einer Übergaberutsche zur Weiterleitung des Teigrohlings an die Vorrichtung zur Verarbeitung der Teigrohlinge mittig angeordnet ist.

Wenn der Teigrohling 3' die mittige Position erreicht hat, werden das erste und das zweite Förderband 1, 2 angehalten, und der Teigrohling 3' wird vom zweiten Förderband 2 mittels einer geeigneten Einrichtung zur Übergabe der mittig zur Längsachse des weiteren Förderbandes bzw. der Übergaberutsche angeordneten Teigrohlinge an das weitere Förderband bzw. an die Übergaberutsche übergeben.

Nach der Übergabe des Teigrohlings 3' werden die Förderbänder 1, 2 erneut in Bewegung gesetzt. Bei dem in Figur 1 gezeigten Beispiel ist die Einrichtung zur Übergabe des in Bezug auf die Längsachse eines weiteren Förderbandes oder einer Übergaberutsche zur Weiterleitung des Teigrohlings an die Vorrichtung zur Verarbeitung der Teigrohlinge mittig angeordneten Teigrohlings 3' als mechanisch, pneumatisch, hydraulisch oder elektrisch antreibbare Schiebevorrichtung 5 ausgeführt.

Wie bereits erläutert, kann alternativ zur Schiebevorrichtung 5 zur Übergabe des mittig zur Längsachse der Übergaberutsche bzw. des weiteren Förderbandes angeordneten Teigrohlings 3' das zweite Förderband 2 als "V-Band" ausgeführt sein, welches zwei Teilförderbänder 6, 7 umfasst, die zum Transportieren der Teigrohlinge parallel und unmittelbar zueinander angrenzend angeordnet und mit der gleichen Geschwindigkeit angetrieben werden, wobei die zwei Teilförderbänder 6, 7 von einer ersten Position zum Transportieren der Teigrohlinge 3, bei der die Obertrümmer beider Förderbänder 6, 7 eine Ebene bilden, durch Drehung um eine Achse parallel zu deren Längsachse oder um deren Längsachse eine zweite Position annehmen können, bei der die Obertrümmer der Förderbänder 6, 7 in einem vorgegebenen Winkel zueinander angeordnet sind, so dass der Teigrohling 3 durch die Gravitation an die darunterliegende Übergaberutsche bzw. an das darunterliegende weitere Förderband übergeben werden kann.

Diese zweite Position der Förderbänder 6, 7 ist Gegenstand der Figur 2. Nach der Übergabe des Teigrohlings 3 nehmen beide Förderbänder die erste Position an, bei der sie parallel und unmittelbar zueinander angrenzend angeordnet sind.

Bei dem in Figur 1 gezeigten Beispiel ist zum Antreiben des ersten und des zweiten Förderbandes 1, 2 eine vorzugsweise als Elektromotor ausgeführte Antriebseinheit 8 vorgesehen, wobei die unterschiedlichen Geschwindigkeiten der Förderbänder durch unterschiedliche Übersetzungen der Antriebsdrehzahl der Antriebseinheit über unterschiedlich dimensionierte Zahnräder erzielt werden.

Wie aus der Beschreibung der Erfindung ersichtlich, wird auch ein Verfahren zur Zuführung von Teigrohlingen 3, 3' an eine Vorrichtung zur Verarbeitung der Teigrohlinge vorgeschlagen, im Rahmen dessen die Teigrohlinge 3 zu Beginn des Zuführprozesses auf einem ersten Förderband 1 angeordnet sind und vom ersten Förderband 1 an ein zweites Förderband 2 übergeben werden, wobei die Geschwindigkeit des zweiten Förderbandes 2 um ein vorgegebenes Maß höher ist, als die Geschwindigkeit des ersten Förderbandes 1, wodurch die Teigrohlinge 3 bei der Übergabe vom ersten Förderband 1 an das mindestens eine zweite Förderband 2 gestreckt und parallel zur Förderrichtung des zweiten Förderbandes 2 ausgerichtet werden. Gemäß der Erfindung ist der Haftreibungskoeffizient des mindestens einen zweiten Förderbandes 2 höher als der Haftreibungskoeffizient des ersten Förderbandes 1, so dass, insbesondere bei ein hohes Gewicht aufweisenden Teigrohlingen ein "Leerlaufen" des zweiten Förderbandes 2 vermieden werden kann. Hierbei kann im Rahmen des Verfahrens vorgesehen sein, dass das dem ersten Förderband 1 abgewandte Ende eines vom zweiten Förderband 2 transportierten ankommenden Teigrohlings 3 von einem Sensor 4 erfasst wird, wobei der Sensor 4 dadurch bedämpft wird, wobei der Sensor 4 solange bedämpft bleibt, bis sich der Teigrohling 3 aufgrund der Bewegung des zweiten Förderbandes 2 nicht mehr im Detektionsbereich des Sensors 4 befindet, wobei anhand der Bedämpfungsdauer des Sensors 4 und der Fördergeschwindigkeit des zweiten Förderbandes 2 in einer Steuerung die Länge des gestreckten und parallel zur Förderrichtung des zweiten Förderbandes 2 ausgerichteten Teigrohlings 3 ermittelt, wobei, wenn die ermittelte Länge des Teigrohlings 3 eine Soll-Länge über- oder untersteigt, das zweite Förderband 2 derart gesteuert wird, dass dieser Teigrohling das Ende des zweiten Förderbandes 2 erreicht, wo er durch die weitere Drehung des Förderbandes 2 an einen Behälter oder an ein weiteres Förderband übergeben wird, wodurch der Teigrohling aussortiert wird. Für den Fall, dass die ermittelte Länge des Teigrohlings 3 der Soll-Länge plus/minus einen vorgegebenen Längen-Offset entspricht, wird der Teigrohling 3 vom zweiten Förderband 2 so weit transportiert, bis er in Bezug auf die Längsachse eines weiteren Förderbandes oder einer Übergaberutsche zur Weiterleitung der Teigrohlinge 3, 3' an die Vorrichtung zur Verarbeitung der Teigrohlinge mittig angeordnet ist.

## Patentansprüche

1. Zuführvorrichtung für Teigrohlinge (3, 3'), insbesondere für zur Brezelherstellung vorgeformte Teigstränge welche ein erstes Förderband (1) und mindestens ein zweites Förderband (2) umfasst, die hintereinander geschaltet sind, wobei die Teigrohlinge (3) zu Beginn des Zuführprozesses auf dem ersten Förderband (1) angeordnet sind und vom ersten Förderband (1) an das zweite Förderband (2) übergeben werden, wobei im Betrieb der Zuführvorrichtung die Geschwindigkeit des mindestens einen zweiten Förderbandes (2) um ein vorgegebenes Maß höher ist, als die Geschwindigkeit des ersten Förderbandes, wodurch die Teigrohlinge (3) bei der Übergabe vom ersten Förderband (1) an das zweite Förderband (2) gestreckt und parallel zur Förderrichtung des zweiten Förderbandes (2) ausgerichtet werden, **dadurch gekennzeichnet, dass** der Haftreibungskoeffizient des mindestens einen zweiten Förderbandes (2) höher ist als der Haftreibungskoeffizient des ersten Förderbandes (1).

2. Zuführvorrichtung für Teigrohlinge (3, 3'), insbesondere für zur Brezelherstellung vorgeformte Teigstränge, nach Anspruch 1, **dadurch gekennzeichnet, dass** sie einen Sensor (4) umfasst, welcher im Betrieb der Zuführvorrichtung das dem ersten Förderband abgewandte Ende eines vom zweiten Förderband (2) transportierten ankommenden Teigrohlings erfasst und dadurch bedämpft wird, wobei der Sensor solange bedämpft bleibt, bis sich der Teigrohling nicht mehr im Detektionsbereich des Sensors befindet, wobei anhand der Bedämpfungsdauer des Sensors (4) und der Fördergeschwindigkeit des zweiten Förderbandes (2) in einer Steuerung die Länge des gestreckten und parallel zur Förderrichtung des zweiten Förderbandes (2) ausgerichteten Teigrohlings (3) ermittelbar ist.

3. Zuführvorrichtung für Teigrohlinge (3, 3'), insbesondere für zur Brezelherstellung vorgeformte Teigstränge, nach Anspruch 2, **dadurch gekennzeichnet, dass** für den Fall, dass die ermittelte Länge des Teigrohlings (3) eine Soll-Länge plus/minus einen vorgegebenen Längen-Offset über- oder untersteigt, das zweite Förderband (2) derart ansteuerbar ist, dass der Teigrohling (3, 3') das Ende des zweiten Förderbandes (2) erreicht, wo er durch die weitere Drehung des Förderbandes (2) an einen Behälter oder an ein weiteres Förderband übergeben wird, wodurch der Teigrohling (3, 3') aussortiert wird, wobei für den Fall, dass die ermittelte Länge des Teigrohlings (3') der Soll-Länge plus/minus einen vorgegebenen Längen-Offset entspricht, das zweite Förderband (2) derart ansteuerbar ist, dass der Teigrohling (3') vom zweiten Förderband (2) so weit transportiert wird, bis er in Bezug auf die Längsachse eines weiteren Förderbandes oder einer Übergaberutsche zur Weiterleitung der Teigrohlinge (3, 3') an die Vorrichtung zur Verarbeitung der Teigrohlinge mittig angeordnet ist.

4. Zuführvorrichtung für Teigrohlinge (3, 3'), insbesondere für zur Brezelherstellung vorgeformte Teigstränge, nach Anspruch 3, **dadurch gekennzeichnet, dass** sie eine Einrichtung zur Übergabe der mittig zur Längsachse der Übergaberutsche bzw. des weiteren Förderbandes angeordneten Teigrohlinge (3, 3') umfasst.

5. Zuführvorrichtung für Teigrohlinge (3, 3'), insbesondere für zur Brezelherstellung vorgeformte Teigstränge, nach Anspruch 4, **dadurch gekennzeichnet, dass** die Einrichtung zur Übergabe der mittig zur Längsachse der Übergaberutsche bzw. des weiteren Förderbandes angeordneten Teigrohlinge (3, 3') als mechanisch, pneumatisch, hydraulisch oder elektrisch antreibbare Schiebevorrichtung (5) ausgeführt ist.

6. Zuführvorrichtung für Teigrohlinge (3, 3'), insbesondere für zur Brezelherstellung vorgeformte Teigstränge, nach Anspruch 4, **dadurch gekennzeichnet, dass** zur Übergabe der mittig zur Längsachse der Übergaberutsche bzw. des weiteren Förderbandes angeordneten Teigrohlinge (3, 3') das zweite Förderband (2) als "V-Band" ausgeführt ist, welches aus zwei Teilförderbändern (6, 7) besteht, die zum Transportieren der Teigrohlinge (3, 3') parallel und unmittelbar zueinander angrenzend angeordnet und mit der gleichen Geschwindigkeit angetrieben werden, wobei die zwei Teilförderbänder (6, 7) von einer ersten Position zum Transportieren der Teigrohlinge (3), bei der die Obertrümmer beider Förderbänder (6, 7) eine Ebene bilden, durch Drehung um eine Achse parallel zu deren Längsachse oder um deren Längsachse eine zweite Position annehmen können, bei der die Obertrümmer der Förderbänder (6, 7) in einem vorgegebenen Winkel zueinander angeordnet sind, so dass der Teigrohling (3, 3') durch die Gravitation an die darunterliegende Übergaberutsche bzw. an das darunterliegende weitere Förderband übergeben werden kann.

7. Zuführvorrichtung für Teigrohlinge (3, 3'), insbesondere für zur Brezelherstellung vorgeformte Teigstränge, nach einem der vorangehenden Ansprüche, **dadurch gekennzeichnet, dass** zum Beschicken mehrerer Vorrichtungen zur Verarbeitung von Teigrohlingen dem ersten Förderband (1) mehrere zweite Förderbänder (2) nachgeschaltet sind, die jeweils einer Vorrichtung zur Verarbeitung von Teigrohlingen zugeordnet sind, wobei die Breite des ersten Förderbandes (1) derart gewählt ist, dass die Teigrohlinge gleichzeitig an die zweiten Förderbänder (2) übergeben werden können.

8. Zuführvorrichtung für Teigrohlinge (3, 3'), insbesondere für zur Brezelherstellung vorgeformte Teigstränge, nach einem der vorangehenden Ansprüche, **dadurch gekennzeichnet, dass** das erste und das zumindest eine zweite Förderband (1, 2) dieselbe Längsachse oder parallel zueinander angeordnete Längsachsen aufweisen oder ein einem beliebigen Winkel zueinander angeordnet sind.

9. Verfahren zur Zuführung von Teigrohlingen (3, 3') an eine Vorrichtung zur Verarbeitung der Teigrohlinge, wobei die Teigrohlinge (3) zu Beginn des Zuführprozesses auf einem ersten Förderband (1) angeordnet sind und vom ersten Förderband (1) an ein zweites Förderband, übergeben werden, wobei die Geschwindigkeit des zweiten Förderbandes (2) um ein vorgegebenes Maß höher ist, als die Geschwindigkeit des ersten Förderbandes (1), **dadurch gekennzeichnet, dass** der Haftreibungskoeffizient des zweiten Förderbandes höher ist als der Haftreibungskoeffizient des ersten Förderbandes, wodurch die Teigrohlinge (3) bei der Übergabe vom ersten Förderband (1) an das mindestens eine zweite Förderband (2) gestreckt und parallel zur Förderrichtung des zweiten Förderbandes (2) ausgerichtet werden.

10. Verfahren zur Zuführung von Teigrohlingen (3, 3') an eine Vorrichtung zur Verarbeitung der Teigrohlinge, nach Anspruch 9, **dadurch gekennzeichnet, dass** das dem ersten Förderband (1) abgewandte Ende eines vom zweiten Förderband (2) transportierten ankommenden Teigrohlings von einem Sensor (4) erfasst wird, wobei der Sensor (4) dadurch bedämpft wird, wobei der Sensor (4) solange bedämpft bleibt, bis sich der Teigrohling (3) aufgrund der Bewegung des zweiten Förderbandes (2) nicht mehr im Detektionsbereich des Sensors (4) befindet, wobei anhand der Bedämpfungsdauer des Sensors (4) und der Fördergeschwindigkeit des zweiten Förderbandes (2) in einer Steuerung die Länge des gestreckten und parallel zur Förderrichtung des zweiten Förderbandes (2) ausgerichteten Teigrohlings (3) ermittelt wird, wobei, wenn die ermittelte Länge des Teigrohlings (3) eine Soll-Länge plus/minus einen vorgegebenen Längen-Offset über- oder untersteigt, das zweite Förderband (2) derart gesteuert wird, dass dieser Teigrohling das Ende des zweiten Förderbandes (2) erreicht, wo er durch die weitere Drehung des Förderbandes (2) an einen Behälter oder an ein weiteres Förderband übergeben wird, wodurch der Teigrohling aussortiert wird und wobei für den Fall, dass die ermittelte Länge des Teigrohlings (3) der Soll-Länge plus/minus einen vorgegebenen Längen-Offset entspricht, der Teigrohling (3) vom zweiten Förderband (2) so weit transportiert wird, bis er in Bezug auf die Längsachse eines weiteren Förderbandes oder einer Übergaberutsche zur Weiterleitung der Teigrohlinge (3, 3') an die Vorrichtung zur Verarbeitung der Teigrohlinge mittig angeordnet ist.

## Claims

1. A supply device for dough blanks (3, 3'), in particular for preformed dough strands for producing pretzels, which comprises a first conveyor belt (1) and at least one second conveyor belt (2), which are placed one behind the other, the dough blanks (3) being arranged on the first conveyor belt (1) at the start of the supply process and being transferred from the first conveyor belt (1) to the second conveyor belt (2), the speed of the at least one second conveyor belt (2) being higher by a predefined amount than the speed of the first conveyor belt during operation of the supply device, as a result of which the dough blanks (3) are stretched and aligned parallel to the conveying direction of the second conveyor belt (2) during transfer from the first conveyor belt (1) to the second conveyor belt (2), **characterised in that** the coefficient of static friction of the at least one second conveyor belt (2) is greater than the coefficient of static friction of the first conveyor belt (1).

2. The supply device for dough blanks (3, 3'), in particular for preformed dough strands for producing pretzels, according to claim 1, **characterised in that** it comprises a sensor (4), which senses the end, facing away from the first conveyor belt, of an approaching dough blank that is transported by the second conveyor belt (2), and is damped thereby during operation of the supply device, wherein the sensor remains damped until the dough blank is no longer within the detection range of the sensor, wherein the damping duration of the sensor (4) and the conveying speed of the second conveyor belt (2) can be used in a controller to determine the length of the stretched dough blank (3) aligned parallel to the conveying direction of the second conveyor belt (2).

3. The supply device for dough blanks (3, 3'), in particular for preformed dough strands for producing pretzels, according to claim 2, **characterised in that** if the determined length of the dough blank (3) is greater than or less than a target length plus or minus a predefined length offset, the second conveyor belt (2) can be actuated in such a manner that the dough blank (3, 3') reaches the end of the second conveyor belt (2), where it is transferred by the further rotation of the conveyor belt (2) to a container or to a further conveyor belt, as a result of which the dough blank (3, 3') is rejected, wherein, if the determined length of the dough blank (3') corresponds to the target length plus or minus a predefined length offset, the second conveyor belt (2) can be actuated in such a manner that the dough blank (3') is transported by the second conveyor belt (2) until it is arranged centrally in relation to the longitudinal axis of a further conveyor belt or transfer chute for passing the dough blanks (3, 3') on to the device for processing the dough blanks.

4. The supply device for dough blanks (3, 3'), in particular for preformed dough strands for producing pretzels, according to claim 3, **characterised in that** it comprises an apparatus for transferring the dough blanks (3, 3') arranged centrally in relation to the longitudinal axis of the transfer chute or of the further conveyor belt.

5. The supply device for dough blanks (3, 3'), in particular for preformed dough strands for producing pretzels, according to claim 4, **characterised in that** the apparatus for transferring the dough blanks (3, 3') arranged centrally in relation to the longitudinal axis of the transfer chute or of the further conveyor belt is in the form of a mechanically, pneumatically, hydraulically or electrically driven pushing device (5).

6. The supply device for dough blanks (3, 3'), in particular for preformed dough strands for producing pretzels, according to claim 4, **characterised in that** to transfer the dough blanks (3, 3') arranged centrally in relation to the longitudinal axis of the transfer chute or of the further conveyor belt, the second conveyor belt (2) is in the form of a "V-belt", which consists of two partial conveyor belts (6, 7), which are arranged parallel and directly adjacent to each other and are driven at the same speed to transport the dough blanks (3, 3'), wherein the two partial conveyor belts (6, 7), from a first position for transporting the dough blanks (3), in which the upper runs of the two conveyor belts (6, 7) form a plane, can assume, by rotation about an axis parallel to the longitudinal axis thereof or about the longitudinal axis thereof, a second position, in which the upper runs of the conveyor belts (6, 7) are arranged at a predefined angle to each other, so that the dough blank (3, 3') can be transferred to the transfer chute underneath or to the further conveyor belt underneath under the effect of gravity.

7. The supply device for dough blanks (3, 3'), in particular for preformed dough strands for producing pretzels, according to any one of the preceding claims, **characterised in that** in order to charge a plurality of devices for processing dough blanks, a plurality of second conveyor belts (2) are arranged downstream of the first conveyor belt (1), said second conveyor belts each being assigned to one device for processing dough blanks, wherein the width of the first conveyor belt (1) is selected to be such that the dough blanks can be transferred to the second conveyor belts (2) simultaneously.

8. The supply device for dough blanks (3, 3'), in particular for preformed dough strands for producing pretzels, according to any one of the preceding claims, **characterised in that** the first and the at least one second conveyor belt (1, 2) have the same longitudinal axis or have longitudinal axes arranged parallel to each other or are arranged at any desired angle to each other.

9. A method for supplying dough blanks (3, 3') to a device for processing the dough blanks, the dough blanks (3) being arranged on a first conveyor belt (1) at the start of the supply process and being transferred from the first conveyor belt (1) to a second conveyor belt, the speed of the second conveyor belt (2) being higher by a predefined amount than the speed of the first conveyor belt (1), **characterised in that** the coefficient of static friction of the second conveyor belt is higher than the coefficient of static friction of the first conveyor belt, as a result of which the dough blanks (3) are stretched and aligned parallel to the conveying direction of the second conveyor belt (2) during transfer from the first conveyor belt (1) to the at least one second conveyor belt (2).

10. The method for supplying dough blanks (3, 3') to a device for processing the dough blanks according to claim 9, **characterised in that** the end, facing away from the first conveyor belt (1), of an approaching dough blank transported by the second conveyor belt (2) is sensed by a sensor (4), wherein the sensor (4) is damped thereby, wherein the sensor (4) remains damped until the dough blank (3) is no longer within the detection range of the sensor (4) owing to the movement of the second conveyor belt (2), wherein the damping duration of the sensor (4) and the conveying speed of the second conveyor belt (2) are used in a controller to determine the length of the stretched dough blank (3) aligned parallel to the conveying direction of the second conveyor belt (2), wherein, if the determined length of the dough blank (3) is greater than or less than a target length plus or minus a predefined length offset, the second conveyor belt (2) is actuated in such a manner that said dough blank reaches the end of the second conveyor belt (2), where it is transferred by further rotation of the conveyor belt (2) to a container or to a further conveyor belt, as a result of which the dough blank is rejected, and wherein, if the determined length of the dough blank (3) corresponds to the target length plus or minus a predefined length offset, the dough blank (3) is transported by the second conveyor belt (2) until it is arranged centrally in relation to the longitudinal axis of a further conveyor belt or of a transfer chute for passing the dough blanks (3, 3') on to the device for processing the dough blanks.

## Revendications

1. Dispositif d'alimentation de pâtons (3, 3'), notamment de tronçons de pâte préfaçonnés pour la production de bretzels, lequel comprend une première bande transporteuse (1) et au moins une deuxième bande transporteuse (2) qui sont montées l'une derrière l'autre, au début du processus d'alimentation, les pâtons (3) étant placés sur la première bande transporteuse (1) et étant transférés de la première bande transporteuse (1) sur la deuxième bande transporteuse (2), en service du dispositif d'alimentation, la vitesse de l'au moins une deuxième bande transporteuse (2) étant plus élevée d'une certaine dimension que la vitesse de la première bande transporteuse, suite à quoi, lors du transfert de la première bande transporteuse (1) sur la deuxième bande transporteuse (2), les pâtons (3) sont étirés et orientés à la parallèle de la direction de transport de la deuxième bande transporteuse (2) **caractérisé en ce que** le coefficient d'adhérence de l'au moins une deuxième bande transporteuse (2) est plus élevé que le coefficient d'adhérence de la première bande transporteuse (1).

2. Dispositif d'alimentation de pâtons (3, 3'), notamment de tronçons de pâte préfaçonnés pour la production de bretzels selon la revendication 1, **caractérisé en ce qu'**il comprend un capteur (4) lequel en service du dispositif d'alimentation détecte l'extrémité opposée à la première bande transporteuse d'un pâton arrivant, transporté par la deuxième bande transporteuse (2) et étant amorti de ce fait, le capteur restant amorti jusqu'à ce que le pâton ne se trouve plus dans la zone de détection du capteur, à l'aide de la durée d'amortissement du capteur (4) et de la vitesse de transport de la deuxième bande transporteuse (2) dans un système de commande, la longueur du pâton (3) étiré et orienté à la parallèle de la direction de transport de la deuxième bande transporteuse (2) pouvant être déterminée.

3. Dispositif d'alimentation de pâtons (3, 3'), notamment de tronçons de pâte préfaçonnés pour la production de bretzels selon la revendication 2, **caractérisé en ce que** pour la cas où la longueur du pâton (3) n'atteint pas ou dépasse une longueur de consigne plus/moins un décalage de longueur prédéfini, la deuxième bande transporteuse (2) peut être actionnée de telle sorte que le pâton (3, 3') atteigne l'extrémité de la deuxième bande transporteuse (2) d'où, par la poursuite du défilement de la bande transporteuse (2), il est transféré à un récipient ou à une bande transporteuse supplémentaire, suite à quoi le pâton (3, 3') est évacué par tri, au cas où la longueur déterminée du pâton (3') correspond à la longueur de consigne plus/moins un décalage de longueur prédéfini, la deuxième bande transporteuse (2) pouvant être actionnée de telle sorte que le pâton (3') soit transporté par la bande transporteuse (2) aussi loin jusqu'à ce qu'il soit placé au centre, par rapport à l'axe longitudinal d'une bande transporteuse supplémentaire ou d'une glissière de transfert, pour la transmission ultérieure des pâtons (3, 3') au dispositif de mise en oeuvre des pâtons.

4. Dispositif d'alimentation de pâtons (3, 3'), notamment de tronçons de pâte préfaçonnés pour la production de bretzels selon la revendication 3, **caractérisé en ce qu'**il comprend un système de transfert des pâtons (3, 3') placés au centre de la glissière de transfert ou de la bande transporteuse supplémentaire.

5. Dispositif d'alimentation de pâtons (3, 3'), notamment de tronçons de pâte préfaçonnés pour la production de bretzels selon la revendication 4, **caractérisé en ce que** le système de transfert des pâtons (3, 3') placés au centre de la glissière de transfert ou de la bande transporteuse supplémentaire est réalisé en tant que dispositif de poussée (5) à entraînement soit mécanique, pneumatique, hydraulique ou électrique.

6. Dispositif d'alimentation de pâtons (3, 3'), notamment de tronçons de pâte préfaçonnés pour la production de bretzels selon la revendication 4, **caractérisé en ce que** pour transférer les pâtons (3, 3') placés au centre de la glissière de transfert ou de la bande transporteuse supplémentaire, la deuxième bande transporteuse (2) est réalisée sous la forme d'une bande en « V », laquelle est constituée de deux bandes transporteuses partielles (6, 7) qui pour transporter les pâtons (3, 3') sont placées à la parallèle et en étant directement adjacentes l'une à l'autre et qui sont entraînées à la même vitesse, à partir d'une première position pour le transport des pâtons (3), dans laquelle les brins supérieurs des deux bandes transporteuses (6, 7) forment un plan, par rotation autour d'un axe à la parallèle de leur axe longitudinal ou autour de leur axe longitudinal, les deux bandes transporteuses partielles (6, 7) pouvant adopter une deuxième position dans laquelle les brins supérieurs des bandes transporteuses (6, 7) sont placés sous un angle prédéfini, l'un par rapport à l'autre, de sorte que par la gravitation, le pâton (3, 3') puisse être transféré à la glissière de transfert sous-jacente ou à la bande transporteuse supplémentaire sous-jacente.

7. Dispositif d'alimentation de pâtons (3, 3'), notamment de tronçons de pâte préfaçonnés pour la production de bretzels selon l'une quelconque des revendications précédentes, **caractérisé en ce que** pour charger plusieurs dispositifs pour la mise en oeuvre de pâtons, plusieurs deuxièmes bandes transporteuses (2) qui sont associées chacune à un dispositif de mise en oeuvre de pâtons sont placés en aval de la première bande transporteuse (1), la largeur de la deuxième bande transporteuse (1) étant choisie de telle sorte, que les pâtons puissent être transférés simultanément sur la deuxième bande transporteuse (2).

8. Dispositif d'alimentation de pâtons (3, 3'), notamment de tronçons de pâte préfaçonnés pour la production de bretzels selon l'une quelconque des revendications précédentes, **caractérisé en ce que** la première et l'au moins une deuxième bandes transporteuses (1, 2) comportent le même axe longitudinal ou des axes longitudinaux placés en parallèles les uns par rapport aux autres ou sont placées sous un angle quelconque l'une par rapport à l'autre.

9. Procédé destiné à alimenter des pâtons (3, 3') sur un dispositif de mise en oeuvre de pâtons, au début du processus d'alimentation, les pâtons (3) étant placés sur une première bande transporteuse (1) et étant transférés de la première bande transporteuse (1) sur une deuxième bande transporteuse (f), la vitesse de la deuxième bande transporteuse (2) étant plus élevée d'une certaine dimension que la vitesse de la première bande transporteuse (1), **caractérisé en ce que** le coefficient d'adhérence de la deuxième bande transporteuse est plus élevé que le coefficient d'adhérence de la première bande transporteuse, suite à quoi, lors du transfert de la première bande transporteuse (1) sur la deuxième bande transporteuse (2), les pâtons (3) sont étirés et orientés à la parallèle de la direction de transport de la deuxième bande transporteuse (2).

10. Procédé destiné à alimenter des pâtons (3, 3') sur un dispositif de mise en oeuvre de pâtons selon la revendication 9, **caractérisé en ce que** l'extrémité opposée à la première bande transporteuse (1) d'un pâton arrivant, transporté par la deuxième bande transporteuse (2) est détectée par un capteur (4), le capteur (4) étant amorti de ce fait, le capteur (4) restant amorti jusqu'à ce que, du fait du déplacement de la deuxième bande transporteuse (2), le pâton (3) ne se trouve plus dans la zone de détection du capteur (4), à l'aide de la durée d'amortissement du capteur (4) et de la vitesse de transport de la deuxième bande transporteuse (2), dans un système de commande, la longueur du pâton (3) étiré et orienté à la parallèle de la direction de transport de la deuxième bande transporteuse (2) étant déterminée, pour la cas où la longueur déterminé du pâton (3) n'atteint pas ou dépasse une longueur de consigne plus/moins un décalage de longueur prédéfini, la deuxième bande transporteuse (2) pouvant être commandée de telle sorte que ledit pâton atteigne l'extrémité de la deuxième bande transporteuse (2) d'où, par la poursuite du défilement de la bande transporteuse (2), il est transféré à un récipient ou à une bande transporteuse supplémentaire, suite à quoi le pâton est évacué par tri et au cas où la longueur déterminée du pâton (3) correspond à la longueur de consigne plus/moins un décalage de longueur prédéfini, le pâton (3) est transporté par la deuxième bande transporteuse (2) aussi loin jusqu'à ce qu'il soit placé au centre, par rapport à l'axe longitudinal d'une bande transporteuse supplémentaire ou d'une glissière de transfert, pour la transmission ultérieure des pâtons (3, 3') au dispositif de mise en oeuvre des pâtons.
